Europäisches Patentamt

European Patent Office

Office européen des brevets

(11) Veröffentlichungsnummer: **0 382 090**
**A1**

## (12) EUROPÄISCHE PATENTANMELDUNG

(21) Anmeldenummer: 90101991.9

(22) Anmeldetag: 01.02.90

(51) Int. Cl.5: **G01S 13/44, G01S 13/24**

(30) Priorität: 09.02.89 CH 449/89

(43) Veröffentlichungstag der Anmeldung:
**16.08.90 Patentblatt 90/33**

(84) Benannte Vertragsstaaten:
**CH IT LI NL**

(71) Anmelder: **SIEMENS-ALBIS AKTIENGESELLSCHAFT PV/Patente und Verträge Postfach CH-8047 Zürich(CH)**

(72) Erfinder: **Baumberger, Marcel, Dr.
Kornhausstrasse 51
CH-8037 Zürich(CH)**
Erfinder: **Schenkel, Albert, Dr.
Wunderlistrasse 47
CH-8037 Zürich(CH)**

(54) **Verfahren zur Vermeidung ungünstiger Phasenlagen in einem nach der Crossfeed-Methode arbeitenden Radargerät.**

(57) Bei der Verfolgung tieffliegender Ziele wird die genaue Winkelvermessung mit einem herkömmlichen Monopulsradargerät vor allem über Wasseroberflächen durch Mehrwegempfang praktisch verunmöglicht. Die Crossfeed-Methode, ein Verfahren zur Spiegeleffektkorrektur, liefert ein korrigiertes Winkelfehlersignal das die genaue Positionsbestimmung eines Flugobjektes erlaubt. Phasendifferenzen des direkten relativ zum gespiegelten Radarechosignal um $0°$ und um $180°$ haben dabei einen ungünstigen Einfluss auf die Ergebnisse der Crossfeed-Methode. Nach dem erfindungsgemässen Verfahren werden die Bereiche ungünstiger Phasenlagen eingeschränkt, indem die Sendefrequenz zwischen mindestens zwei Frequenzen umgeschaltet wird. Nach einem weiteren erfindungsgemässen Verfahren können Radarechosignale mit ungünstiger Phasenlage erkannt und ausgeblendet werden.

Fig. 2

EP 0 382 090 A1

Die vorliegende Erfindung betrifft ein Verfahren nach dem Oberbegriff des Patentanspruchs 1 bzw.6.

Zur Verfolgung von Flugobjekten werden heute normalerweise Monopuls-Folgeradargeräte eingesetzt. Monopulsradargeräte haben dabei die Fähigkeit, alle zur Verfolgung notwendigen Winkelfehler-Informationen aus einem einzigen Radarpuls zu gewinnen. Monopuls-und weitere Folgeradargeräte werden z.B. in Merrill Skolnik, Radar-Handbook, Mc Graw Hill 1970, Kapitel 21 beschrieben.

Bei der Verfolgung tieffliegender Ziele wird die genaue Winkelvermessung mit einem herkömmlichen Monopulsradargerät vor allem über Wasseroberflächen durch Mehrwegempfang praktisch verunmöglicht. Neben dem Signal des eigentlich zu verfolgenden Ziels wird ein zweites an der Wasseroberfläche gespiegeltes Zielecho empfangen, das vom ersteren in einem herkömmlichen Monopulsradargerät weder in der Distanz noch im Winkel aufgelöst werden kann. Diese Überlagerung ergibt falsche Elevationsangaben oder kann sogar zum Zielverlust führen. Die Crossfeed-Methode, ein Verfahren zur Spiegeleffektkorrektur, welches z.B. in den schweizerischen Patentschriften 592 887 und 629 898 beschrieben wird, liefert unter Ausnützung zusätzlicher Informationen ein korrigiertes Winkelfehlersignal mit korrekten Fehlersignalen sowohl auf dem Ziel als auch auf dem Scheinziel.

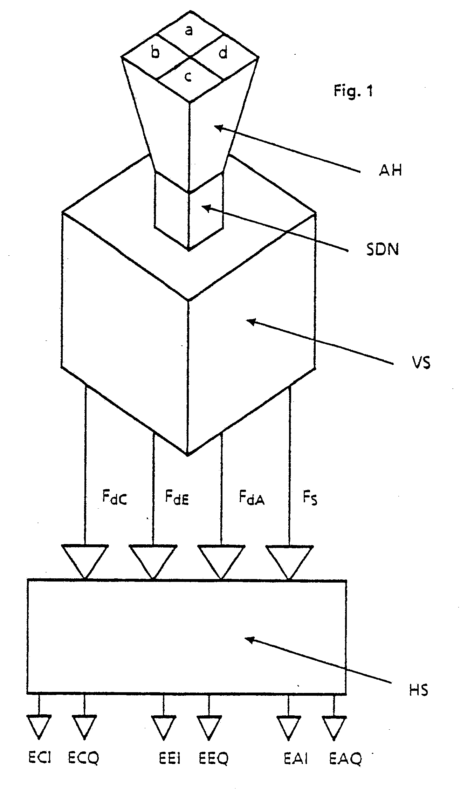

Fig. 1 zeigt die Eingangsstufen eines bekannten nach der Crossfeed-Methode arbeitenden Radargerätes. Von den Antennenhörnern AH mit den Eingängen a,b,c und d werden die Eingangssignale an ein Summen-Differenz-Netzwerk SDN weitergegeben. Dieses liefert nachfolgend ein Summensignal $F_S$ = (a + b + c + d), ein Azimutsignal $F_{dA}$ = (d - b), ein Elevationssignal $F_{dE}$ = (a - c) und ein Crosssignal $F_{dC}$ = (a + c) - (b + d) an eine Vorstufe VS weiter. In der Vorstufe VS werden diese Signale $F_{dA}$, $F_{dE}$, $F_{dC}$ und $F_S$ auf die ZF-Ebene hinuntergemischt. Nach kohärenter Demodulation werden daraus in der Hauptstufe HS durch Normierung mit dem Summensignal $F_S$ die Inphaseanteile ECI, EEI, EAI der Winkelfehlersignale und die entsprechenden Quadraturanteile ECQ, EEQ und EAQ gewonnen. Beim Auftreten von Spiegeleffekten nehmen die Quadraturanteile ECQ und EEQ Werte an, deren Grösse nicht vernachlässigbar ist. Die Signalauswertung nach der Crossfeedmethode erfordert eine Division der beiden Quadraturanteile des Elevations- und Crosssignals EEQ/ECQ. Die relative Phase des direkten zum reflektierten Radarechosignal hängt u.a. von der Fluggeometrie ab. Deshalb können die Quadraturanteile ECQ und EEQ bei Phasengleichlauf (0° Phasendifferenz) oder Phasenopposition (180° Phasendifferenz) sehr klein werden. Selbst kleine Abweichungen bezüglich Phase und Amplitude in der Symmetrie der Auswertekanäle der Winkelfehlersignale führen in diesen Fällen zu Fehlern in der Division EEQ/ECQ, die sich in Verfolgungsfehlern oder in schlechter Konvergenz des Crossfeedverfahrens auswirken können. Negative Auswirkungen ungünstiger Phasenlagen könnten demnach reduziert werden, falls sich die Systemrestfehler wesentlich verkleinern liessen. Dies ist jedoch mit einem sehr hohen Aufwand verbunden.

Der vorliegenden Erfindung liegt daher die Aufgabe zugrunde, ein Verfahren zur Vermeidung ungünstiger Phasenlagen bzw. zur Einschränkung der Bereiche ungünstiger Phasenlagen und zur Reduktion der Auswirkungen von Systemrestfehlern auf die Verfolgungsgenauigkeit für ein nach der Crossfeed-Methode arbeitendes Radargerät anzugeben. Damit sollen, durch das Auftreten von Radarsignalen mit ungünstiger Phasenlage verursachte Fehler bei der Zielvermessung vermieden werden.

Diese Aufgabe wird durch die im Kennzeichen des Anspruchs 1 bzw. Anspruchs 6 angegebenen Massnahmen gelöst. Vorteilhafte Ausgestaltungen der Erfindung sind in weiteren Ansprüchen angegeben.

Durch die im Kennzeichen des Anspruchs 1 angegebenen Massnahmen werden die Bereiche ungünstiger Phasenlagen (Bereich um 0° bzw. um 180°) stark reduziert. Das heisst, auch wenn der Phasenunterschied zwischen der ungespiegelten und der gespiegelten Komponente des Radarechosignals nahe gegen 0° oder 180° geht, vergrössert sich der Fehler bei der Vermessung nur minimal. Der Bereich, in dem unzulässig grosse Verfolgungsfehler oder sogar eine mögliche Divergenz des Crossfeedverfahrens auftreten, wird auf ein Minimum reduziert.

Durch die im Kennzeichen des Anspruchs 6 angegebenen Massnahmen kann die Annäherung an ungünstige Phasenlagen frühzeitig erkannt werden, so dass das Eintreten ungünstiger Phasenlagen durch geeignete Massnahmen verhindert werden kann. Weiterhin kann damit festgestellt werden, ob die Komponenten der empfangenen Radarechosignale bereits eine ungünstige Phasenlage aufweisen, so dass verhindert werden kann, dass unbrauchbare und eine eventuelle Divergenz ergebende Signale zur Positionsbestimmung und zur Zielverfolgung verwendet werden.

Durch die Anwendung der Erfindung kann die Genauigkeit bei der Positionsbestimmung bzw. Verfolgung von Flugobjekten weiter erhöht werden.

Nachfolgend wird die Erfindung anhand von Zeichnungen beispielsweise näher erläutert.

Es zeigen:

Fig. 1 die Eingangsstufen des eingangs beschriebenen Crossfeed-Radarsystems

Fig. 2 simulierte Verfolgungsfehler eines nach der Crossfeed-Methode und eines ohne Crossfeed-Methode arbeitenden Radargerätes

Fig. 3 simulierte Verfolgungsfehler eines Crossfeed-Radargerätes für verschiedene Ziel-Spiegelbildseparationswinkel $\Theta$ti mit der Eintragung der Grenzwerte der ungünstigen Phasenlagen für den Ziel- Spiegelbildseparationswinkel $\Theta$1

Nach dem erfindungsgemässen Verfahren wird die Sendefrequenz sequentiell von Sendepuls zu Sendepuls oder jeweils nach einer bestimmten Anzahl Sendepulse zwischen zwei oder mehreren Sendefrequenzen zyklisch oder nach passender Auswahl umgeschaltet. Frequenzwechselverfahren (frequency agility) werden in der Radartechnik öfters angewendet, so z.B. zur Reduktion von Seeechos, beschrieben in Merrill Skolnik Radar-Handbook, Mc Graw Hill 1970, Kapitel 26.8; oder zur Detektion von multiple time around echoes, beschrieben in der europäischen Offenlegungsschrift 0 292 912. Anschliessend wird bei der vorliegenden Erfindung eine genügend grosse Anzahl Radarwinkelfehlersignale gemittelt und nach der Crossfeed-Methode zur Positionsbestimmung und Verfolgung eines Flugobjekts verwendet. Die Anzahl der zu mittelnden Pulse wird derart festgelegt, dass sich das Ziel innerhalb des Betrachtungsintervalls nicht wesentlich bewegt, d.h. dass die Änderung der Weglängendifferenz zwischen direktem und gespiegeltem Radarechosignal im Vergleich zur verwendeten Signalwellenlänge vernachlässigt werden kann. Um eine höhere Anzahl Pulse zur Mittelung gemäss den beschriebenen Bedingungen zu erhalten, kann nötigenfalls die Pulsrepetitionsfrequenz des Radargerätes erhöht werden. Vorteilhaft ist dabei die Wahl von möglichst grossen Frequenzdifferenzen $\Delta$f zwischen benachbarten Sendefrequenzen und von einer grösseren Anzahl verschiedener Sendefrequenzen. Von weiterem Nutzen ist es, die Frequenzdifferenz $\Delta$f dem aktuellen Ziel-Spiegelbildseparationswinkel $\Theta$i anzupassen. Für kleinere Ziel-Spiegelbildseparationswinkel $\Theta$i werden dabei höhere Frequenzdifferenzen $\Delta$f verwendet. Weiterhin ist es möglich, die empfangenen Radarechosignale bezüglich ungünstiger Phasenlage zu untersuchen und nur die Radarechosignale mit günstiger Phasenlage weiter zu verarbeiten.

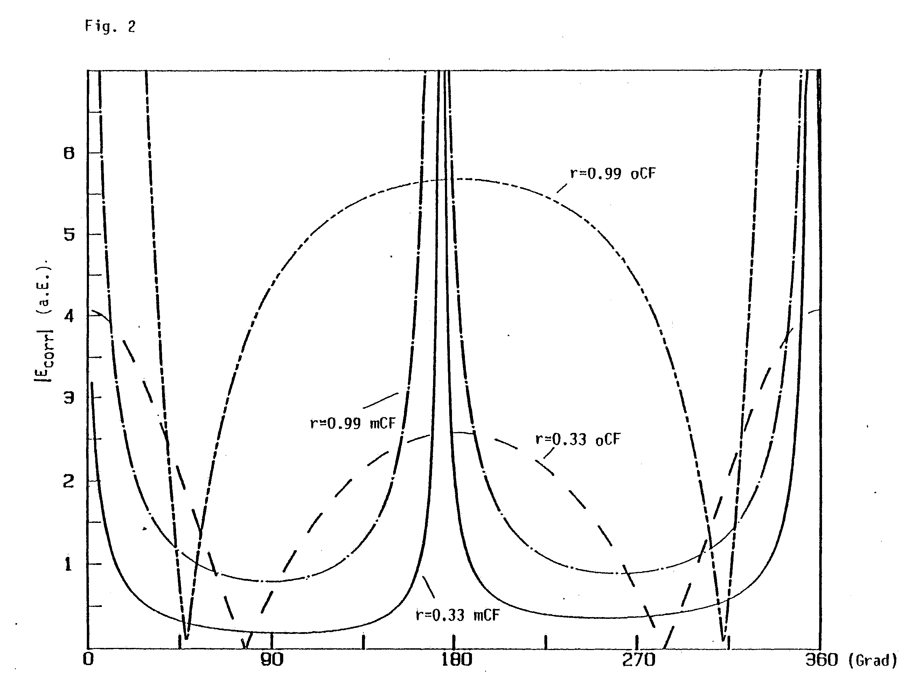

Fig. 2 zeigt den typischen Betrag des Ablagefehlers $|E_{CORR}|$ in Abhängigkeit von der Phasenlage zwischen der ungespiegelten und der gespiegelten Komponente eines Radarechosignals für ein Radargerät, das mit und eines, das ohne Crossfeed-Methode arbeitet ('m CF' bzw. 'o CF'). Dabei wurden für beide Radargeräte je einmal ein Reflexionskoeffizient r = 0.99 und einmal r = 0.33 für einen Ziel-Spiegelbildseparationswinkel $\Theta$1 angenommen. Der Reflexionskoeffizient r gibt an, um welchen Faktor die gespiegelte gegenüber der ungespiegelten Komponente des Radarechosignals abgeschwächt wurde. Durch die Anwendung des Frequenzwechselverfahrens (frequency agility) wird, in Abhängigkeit von der Frequenzdifferenz $\Delta$f, eine Abschwächung der gespiegelten Komponente des Radarechosignals erzielt, die z.B. dem Reflexionsfaktor r = 0.33 entspricht. Durch einen Vergleich der Kurven wird ersichtlich, dass sich nach Anwendung des Frequenzwechselverfahrens für beide Radargeräte eine Reduktion der Verfolgungsfehler ergibt. Wichtig für das Crossfeed-Radargerät, das auch ohne die Anwendung des Frequenzwechselverfahrens verhältnismässig kleine Verfolgungsfehler aufweist, ist jedoch, dass sich die Bereiche ungünstiger Phasenlagen durch die Anwendung des Frequenzwechselverfahrens nun auf einen sehr engen Bereich um 0° bzw. 180° beschränken lassen.

Wie aus Fig. 2 ersichtlich ist, bestehen speziell für das Crossfeed - Radargerät, welches nicht nach dem erfindungsgemässen Verfahren arbeitet (d.h. r = 0.99), um 0° und um 180° grössere Bereiche ungünstiger Phasenlagen. Für das Crossfeed - Radargerät mit dem erfindungsgemässen Verfahren (d.h. r = 0.33) wurden die Bereiche ungünstiger Phasenlagen wesentlich eingeschränkt. Ablagefehler treten demzufolge nur noch kurzzeitig auf und können mit den bekannten Methoden der Signalfilterung und der Signalglättung leicht beseitigt werden.

Mit den nachfolgend beschriebenen Massnahmen können noch Radarechosignale mit ungünstiger Phasenlage erkannt werden. Dadurch kann deren Einfluss auf die Zielvermessung weitgehend vermieden werden. Die Anwendung dieses Verfahrens ist speziell bei Crossfeed-Radargeräten vorteilhaft, die relativ grosse Bereiche ungünstiger Phasenlagen aufweisen. Um nebst dem Eintreten auch die Annäherung an ungünstige Phasenlagen erkennen zu können, wird dabei durch die Teilung des Quadraturanteils EEQ bzw. ECQ durch den Inphaseanteil EEI bzw. ECI des Elevationswinkelfehlersignals bzw. des Crosssignals ein Indikator EEQ/EEI bzw. ECQ/ECI gebildet. Anhand des Wertes des Indikators EEQ/EEI bzw. ECQ/ECI werden nun einzelne oder mehrere gemittelte Radarechosignale bezüglich ungünstiger Phasenlage untersucht. In der Folge werden nur jene Radarechosignale zur Zielvermessung verwendet, die eine günstige Phasenlage aufweisen. Damit werden jene Anteile der Winkelfehlersignale die zu Fehlweisungen führen, ausgeblendet. Weiterhin kann, z.B. bei Crossfeed-Radargeräten mit über längere Zeit konstanter Sendefrequenz, anhand des Indikators EEQ/EEI bzw. ECQ/ECI auch die Annäherung an ungünstige Phasenlagen festgestellt werden. Falls dies erkannt wird, kann z.B. die Sendefrequenz geändert werden, bis sich eine günstigere Phasenlage ergibt.

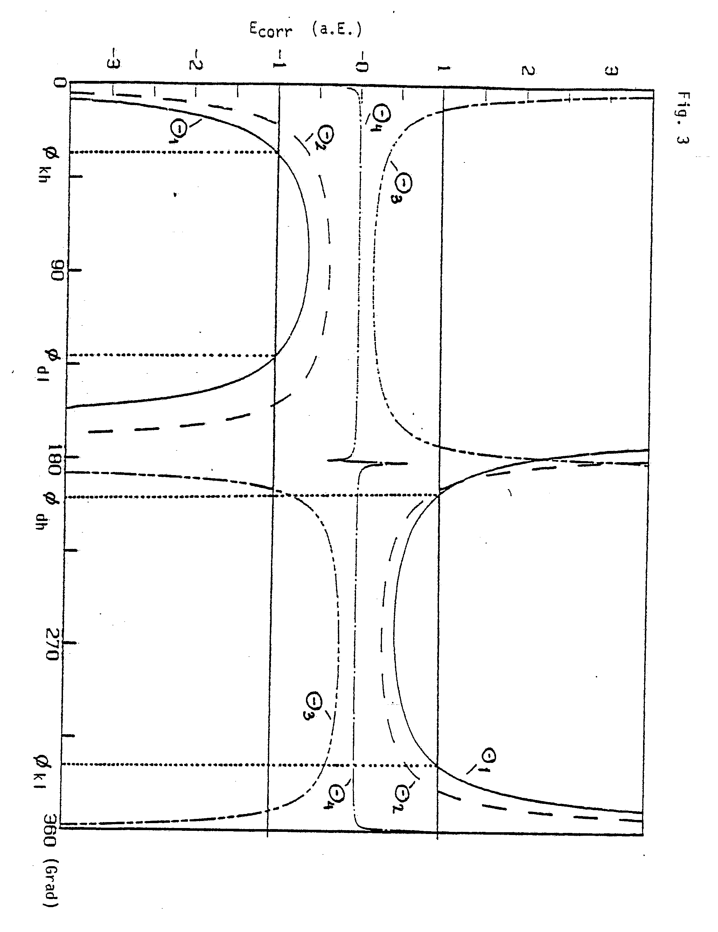

Nachfolgend wird anhand von Fig.3 erläutert, wie die Grenzwerte für die Bereiche ungünstiger Phasenlagen bzw. die dazu korrespondierenden Werte für den Indikator EEQ/EEI bzw. ECQ/ECI für einen Ziel-Spiegelbildseparationswinkel $\Theta 1$ ermittelt werden. Die Bestimmung der genannten Werte verhält sich für beide Indikatoren gleich und wird daher nur für den Indikator EEQ/EEI beschrieben.

Fig.3 zeigt die durch Systemrestfehler verursachten, crossfeedkorrigierten Verfolgungsfehler $E_{CORR}$ unter Spiegeleffekt in Funktion der Phasenlage zwischen ungespiegelter und gespiegelter Komponente des Radarechosignals für verschiedene Ziel-Spiegelbildseparationswinkel ($\Theta 1 < \Theta 2$, $\Theta 2 < \Theta 3$, $\Theta 3 < \Theta 4$). Der typische Verlauf der Verfolgungsfehler $E_{CORR}$, die in Fig.3 in arbiträren Einheiten (a.E.) (arbitrary units) angegeben sind, wurde für das Antennendiagramm einer beliebigen Crossfeedantenne aufgenommen. Durch Einzeichnen der maximal zulässigen Verfolgungsfehler (im vorliegenden Fall + 1 a.E. und -1 a.E.) können die Grenzen der Bereiche ungünstiger Phasenlagen bestimmt werden. Anhand der Phasenwerte $\phi dl$ und $\phi dh$ (Grenzwerte des Bereichs ungünstiger destruktiver Interferenz) und der Phasenwerte $\phi kl$ und $\phi kh$ (Grenzwerte des Bereichs ungünstiger konstruktiver Interferenz) können nun die dazu korrespondierenden Werte für den Indikator EEQ/EEI ermittelt werden. Für negative Werte des Inphaseanteils EEI liegt dabei eine destruktive und für positive Werte des Inphaseanteils EEI eine konstruktive Interferenz vor. Falls z.B. das Vorzeichen von EEI das Vorliegen einer destruktiven Interferenz anzeigt, wird der aktuelle Wert des Indikators EEQ/EEI mit den zu den Phasen $\phi dl$ und $\phi dh$ korrespondierenden Werten für den Indikator EEQ/EEI verglichen und falls der aktuelle Wert des Indikators EEQ/EEI zwischen diesen beiden Werten liegt, besteht eine ungünstige Phasenlage. Vorteilhafterweise werden die Bereiche ungünstiger Phasenlagen und deren korrespondierende Werte für den Indikator EEQ/EEI für weitere Ziel-Spiegelbildseparationswinkel $\Theta i$ festgelegt. Damit wird berücksichtigt, dass sich die Bereiche ungünstiger Phasenlagen vergrössern, falls sich der Ziel-Spiegelbildseparationswinkel $\Theta i$ verkleinert.

**Ansprüche**

1. Verfahren zur Vermeidung ungünstiger Phasenlagen und zur Reduktion der Auswirkungen von Systemrestfehlern in einem nach der Crossfeedmethode arbeitenden Radargerät, **dadurch gekennzeichnet,** dass ein Frequenzwechselverfahren angewendet wird, bei dem die Sendefrequenz zwischen mindestens zwei Frequenzwerten derart umgeschaltet wird, dass der Bereich, indem die Phasenlage zwischen der ungespiegelten und der gespiegelten Komponente eines Radarechosignals ungünstige Werte annehmen kann, reduziert wird.

2. Verfahren nach Anspruch 1, **dadurch gekennzeichnet,** dass eine genügend grosse Anzahl Winkelfehlsignale gemittelt und die resultierenden Werte zur Zielvermessung nach der Crossfeed - Methode verwendet werden.

3. Verfahren nach Anspruch 2, **dadurch gekennzeichnet,** dass die einzelnen Radarechosignale bezüglich ungünstiger Phasenlage untersucht und nur die Signale mit günstiger Phasenlage gemittelt bzw.weiter verarbeitet werden.

4. Verfahren nach Anspruch 2 oder 3, **dadurch gekennzeichnet,** dass die Sendefrequenz von Sendepuls zu Sendepuls oder nach einer Anzahl Sendepulse geändert wird.

5. Verfahren nach Anspruch 2, 3 oder 4, **dadurch gekennzeichnet,** dass die Frequenzdifferenz zwischen benachbarten Sendefrequenzen in Abhängigkeit des Ziel-Spiegelbildseparationswinkels $\Theta i$ und/oder der Anzahl Sendefrequenzen gewählt wird, wobei für kleinere Ziel- Spiegelbildseparationswinkel $\Theta i$ grössere Frequenzdifferenzen gewählt werden.

6. Verfahren zur Vermeidung bzw. zur Reduktion der Häufigkeit des Auftretens ungünstiger Phasenlagen zwischen der ungespiegelten und der gespiegelten Komponente eines Radarechosignals in einem nach der Crossfeedmethode arbeitenden Radargerät, **dadurch ge kennzeichnet,** dass durch Teilung des Quadraturanteils (EEQ) bzw. (ECQ) durch den Inphaseanteil (EEI) bzw. (ECI) des Elevationswinkelfehlersignals bzw. des Crosssignals ein Wert gebildet und mit diesem Wert ermittelt wird, ob sich die Phasenlage ungünstigen Werten annähert bzw. ob eine ungünstige Phasenlage bereits eingetreten ist, wobei bei Annäherung bzw. beim Eintreten von ungünstigen Phasenlagen die Sendefrequenz geändert wird, und/oder ein oder mehrere aufeinanderfolgende Radarechosignale einzeln oder gemittelt bezüglich ungünstiger Phasenlage untersucht und nur die Radarechosignale günstiger Phasenlage weiter verarbeitet werden.

7. Verfahren nach Anspruch 6, **dadurch gekennzeichnet,** dass der sich aus der Division des Quadraturanteils (EEQ) bzw. (ECQ) durch den Inphaseanteil (EEI) bzw. (ECI) ergebende Wert mit einem Wertebereich verglichen wird, dessen Werte jeweils einer ungünstigen Phasenlage entsprechen.

8. Verfahren nach Anspruch 7, **dadurch gekennzeichnet,** dass der den ungünstigen Phasenlagen entsprechende Wertebereich in Abhängigkeit des Ziel-Spiegelbildseparationswinkels $\Theta i$ verändert wird.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,A | INTERNATIONAL CONFERENCE RADAR'87, London, 19.-21. Oktober 1987, Seiten 428-432; A.E. SCHENKEL: "Crossfeed monopulse - A specific method to eliminate elevation mistracking over sea" <br> * Seite 429, rechte Spalte, Abschnitt "Verification and Trials"; Abschnitt 1 * | 1-5,6-8 | G 01 S 13/44 <br> G 01 S 13/24 |
| Y,A | GB-A-2 204 757 (MARCONI) <br> * Zusammenfassung; Seiten 9-11 * | 1-5,6-8 | |
| A | DE-A-3 210 400 (STANDARD ELEKTRIK LORENZ) <br> * Zusammenfassung * | 1-8 | |
| | | | **RECHERCHIERTE SACHGEBIETE (Int. Cl.5)** <br><br> G 01 S <br> H 01 Q |

Der vorliegende Recherchenbericht wurde für alle Patentansprüche erstellt

| Recherchenort | Abschlußdatum der Recherche | Prüfer |
|---|---|---|
| DEN HAAG | 10-05-1990 | ANGRABEIT F.F.K. |